Europäisches Patentamt

European Patent Office

Office européen des brevets

(19)

(11) **EP 1 168 850 A2**

(12) **EUROPEAN PATENT APPLICATION**

(43) Date of publication:
02.01.2002 Bulletin 2002/01

(51) Int Cl.$^7$: **H04N 9/31**

(21) Application number: 01305257.6

(22) Date of filing: 18.06.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 01.07.2000 JP 2000165226

(71) Applicant: **Fujitsu General Limited Kawasaki-shi, Kanagawa-ken 213-8502 (JP)**

(72) Inventors:
• **Taniai, Takayoshi, Fujitsu General Limited Kawasaki-shi, Kanagawa-ken 2138502 (JP)**
• **Harayama, Atsushi, Fujitsu General Limited Kawasaki-shi, Kanagawa-ken 2138502 (JP)**

(74) Representative: **Rackham, Stephen Neil et al GILL JENNINGS & EVERY, Broadgate House, 7 Eldon Street London EC2M 7LH (GB)**

(54) **Projector image display apparatus**

(57) A single polarizer projector (31) using a color switch (i.e., color filter) comprising an image processing circuit (35) for the image scaling processing, a γ correction circuit (36) for γ correction, a panel drive circuit (37) for driving a reflection panel, a color switch drive for circuit (40) for driving a color switch for coloring according to the gradation on the reflection display panel, and a color switch, whereby the color switch drive circuit (40) determines the mean luminance of the outputted picture element data (original image) which has undergone the image processing, and the white color or black color is inserted among the displayed gradation for each of the R, G and B colors according to the value of the mean luminance to expand the dynamic range of the image to be displayed.

# Fig. 1

EP 1 168 850 A2

**Description**

The present invention relates to an image display apparatus by a projector for displaying images by projection through single polarizer, the display apparatus being primarily designed for the improvement of the contrast.

Recently, the projectors have been evolving for further compactness and lightweight as is obvious from that many manufactures are active for the development of the mobile projectors. However, in development such compact and lightweight mobile projectors, it is essential to provide a highly efficient optical system in order to ensure the normal levels for both the luminance and contrast (e.g. 1000 ANS for luminance and 400:1 for contrast).

However, in order for the luminance to be kept at an necessary level, it is necessary to raise the light quantity or the power of the light source lamp, but raising the light quantity or the power of the light source lamp gives rise to a problem, i.e., the increase in the leak of the light that results in an adverse effect on the contrast.

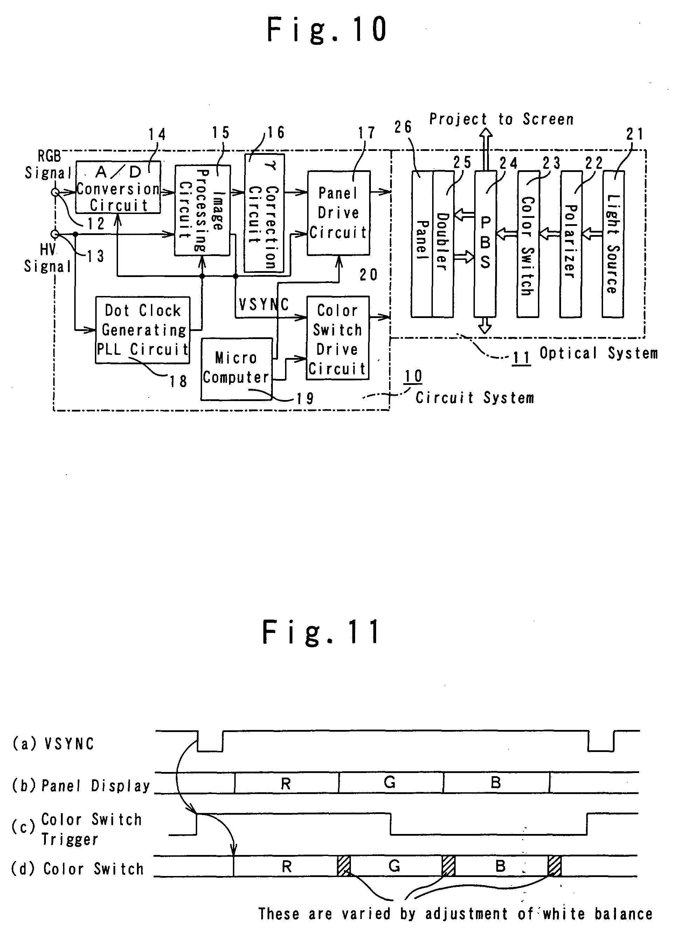

The detail of a conventional projector will be described referring to Figs. 10 and 11.

In the case shown in Fig. 10, the projector comprises a circuit system 10 and an optical system 11. In the circuit system 10, A/D conversion circuit 14 serves for converting analog R, G and B video signals inputted to RGB video signal input terminal 12 to digital R, G and B signals. Dot clock generating PLL circuit 18 generates the dot clock on the basis of HSYNC (Horizontal Synchronizing Signal) inputted to HV synchronizing signal input terminal 13 from the outside of the display apparatus. Image processing circuit 15 is designed for processing the digital R, G and B signals, which have been converted by the A/D conversion circuit 14, for scaling and for obtaining a resolution suiting to display panel 26 of the optical system 11. γ correction circuit 16 is designed for correcting the inputted image data to the colors suiting to the display panel. Panel drive circuit 17 is for driving the display panel 26. Color switch drive circuit 20 is provided for driving the filters (color switch) for coloring the picture elements displayed at the tone levels of the R, G and B signals according to the commands given from a microcomputer 19.

In the optical system 11, light source unit 21 includes a light source lamp, an integrator lens, a polarizing conversion element, a condenser lens or the like. Polarizer 22 is designed for removing P wave component (optical component oscillating parallel to incident plane) of the light from the light source, leaving only S wave component (optical component oscillating vertically to incident plane).

The color switch 23 is designed to turn the direction of polarization of one of R, G and B. The color switch 23 comprises 3 pieces of transmission liquid crystal panels corresponding to R, G and B colors and a retardation film capable of turning only the polarized light of a specific wavelength band, which are put together in an accumulated form. With this color switch 23, when an R light is necessary, only the polarized light of the wavelength band of the R light is turned into P wave while keeping the wavelength bands of the G and B lights unturned to maintain S wave components thereof, whereby the polarized G and B lights are reflected by the polarization beam splitter prism 24 (hereinafter referred to as PBS) while only the polarized R light is permitted to pass through and to reach the reflection display panel 26. Of the light with the P wave component that has arrived at the reflection display panel, only the picture element to be displayed is turned into S wave to be reflected according the video information. Of the light reflected by the reflection display panel 26, only the S wave component is reflected in a direction at 90° to the PBS 24 to be finally projected on the screen. When either the G light or the B light is necessary, it is also possible to turn the wavelength band of either light by means of the color switch 23.

The sticking owing to the memory effect is apt to occur with the reflection display panel because of the characteristic of the liquid crystal panel, unless the polarity of the voltage is changed. Therefore, the doubler 25 consisting of a polarizing switching element for correction for preventing the reversing of the black color or white color, which is apt to occur when the polarity is changed from positive to negative or vice versa, is provided before the reflection display panel 26.

The control timing of the color switch drive circuit 20 in a conventional display apparatus will be explained below referring to Fig. 11.

The VSYNC (a) is a frame synchronizing signal to be externally inputted to HV synchronizing signal input terminal 13 and then inputted to the color switch drive circuit 20 through the image processing circuit 15, and the display is made according to this synchronizing signal. As for the timing of the display on the panel (b), in the case of the single polarizer display unit with a projector, the color tones for the display by R, G and B lights have to be set in order within the display period for 1 frame. The timing of switching corresponds to the display on the panel (b). The color switch trigger (c) is a signal synchronized with the VSYNC and is inputted so as to be capable of switching the color switch 23, synchronizing with the switching of the drive of the panel. Color switch signal (d) represents the timing for the switching of the color switch 23, and it is best for the color switch 23 of the R, G and B colors to be switched synchronizing with the color tone display of the R, G and B lights.

However, since the color switch trigger signal to be inputted is only one synchronized with the VSYNC, when the operation of the color switch 23 is varied for the purpose such as the adjustment of the white balance, this is apt to give rise to a problem that some timing lag occurs with respect to the color tone display for the drive of the panel as is represented by the sections marked with slant lines of the color switch (d), causing the deterioration of the contrast.

Since mere sequential repetition of the R, G and B display spoils the purity of the white color entailing the fall of the luminance, it has come to be considered to include the white in the switching cycle of the R, G and B colors. Simply inserting the white color, however, makes the color tone of the whole image whitish, bringing about unnatural blackening and poor contrast of the image.

The present invention is made in order to resolved the problems of the prior art described above. The first object of the present invention is to provide a display apparatus by a projector, wherein both the luminance and the contrast of the displayed image are improved by inserting the white color or black color among the displayed color tones of the picture element corresponding to the R, G and B colors for a predetermined period of time by means of the color switch without entirely relying on the light quantity or the power of the light source lamp; in order to improve the luminance and the contrast, the mean luminance of the picture element to be displayed is calculated so that the white color or the black color is selectively inserted on the basis of the mean luminance, and the time period of the insertion is varied according to the sampled mean luminance.

In the method in which the light is separated into R, G and B components to be displayed sequentially within a frame, a phenomenon called the false contouring will occur commonly. The false contouring is caused by the luminance difference occurring when the display of an image of, for example, R color corresponding to a high luminance information is followed by the display of an image of, for example, G color corresponding to a relatively low luminance, since such luminance difference causes the formation of the after image that accentuates the contour of the R color. Such a problem, however, can be reduced by suppressing the luminance difference to a largest possible extent.

The second object of the present invention is to alleviate the false contouring by detecting the mean luminance of the image so that when the image is relatively dark, the black color is inserted while inserting the white color when the image is relatively bright, and the false contouring is alleviated by reducing the difference in luminance among the cells through controlling the time period of the insertion.

Further, the present invention enables the timing signals for actually displaying the color tones for the R, G and B colors to be outputted separately by the panel drive circuit, the white balance to be adjusted by adjusting the timing signal, and the timing of the color tone display and that of color switch operation to be synchronized with each other for the improvement of the contrast.

The present invention relates to a single polarizer projector, of an image display apparatus, comprising a image processing circuit for the scaling process of the image, a γ correction circuit for correcting the γ for obtaining a proper color suiting to the display panel, a color switch for assigning the color for the color tone display by the display panel and a color switch drive circuit for driving the color switch, wherein the color switch drive circuit determines the mean luminance of the picture element data (original image) of the image processing circuit so that the white color or black color can be inserted among the displayed color tones corresponding to the R, G and B colors on the basis of the value of the mean luminance, thereby expanding the dynamic range of image display.

The triggers for driving the color switch constitute the triggers for the R, G and B colors, and the triggers, when inputted to the color switch drive circuit, enable the display of the color tones by the panel and the coloring by the color switch to be synchronized with each other for being accomplished.

The image display apparatus by a projector according to the present invention is characterized by that the basis of selection of either the white or black is set to the mean luminance of 50% so that the white is inserted when the mean luminance is 50% or more while the black is inserted when the mean luminance is less than 50% to expand the dynamic range for the improvement of the contrast.

Further, the image display apparatus by a projector may be characterized by that the timing for inserting the white color or the black color is controlled according to the mean luminance so that the purity of the white color or the black color can be raised while maintaining the purities of other factors.

Further, the image display apparatus by a projector may be designed to comprise the color switch drive circuit, which includes an RGB/Y conversion circuit for converting the R, G and B into the luminance signal respectively, the mean luminance calculation circuit for determining the mean luminance, a white color or black color insertion timing control circuit for setting the timing for the insertion of the white color or black color, and the D/A conversion circuit, so that the triggers corresponding to the R, G and B colors are inputted to the white color/black color insertion timing control circuit, whereby the white color/black color insertion timing control circuit synchronizes the first half of the trigger with each of the triggers to output the color information corresponding to each of the triggers, while outputting the white or black information according to the mean luminance and corresponding to the latter half of the trigger.

Further, the image display apparatus by a projector may be designed to comprise the color switch drive circuit, which includes the RGB/Y conversion circuit for converting the R, G and B into the luminance signals, the mean luminance calculation circuit for determining the mean luminance, the white color or black color insertion timing control circuit for generating the timing signal for the insertion of the white color or black color, and the D/A conversion circuit for converting the output of the white color or black color insertion timing control circuit into analog signal, so that a trigger is inputted to the white color or black color insertion timing control circuit to generate the output timing signal corresponding to each of the R, G and B colors, whereby the color information corresponding to the generated output timing signal is outputted, and the white color or black color information is outputted corresponding to the man luminance corresponding to the latter half of the trigger.

Further, the image display apparatus by a projector may be designed so that, in outputting the color information according to the trigger, the voltage of the output from the D/A converter is controlled according to the mean luminance to control the transmittance of the color switch and to thereby improve the contrast.

Further, the image display apparatus by a projector may comprise the white color and black color insertion timing control circuit including a first counter for counting the pulse width of the trigger signal, a second counter for detecting by counting the assert position of the trigger signal, a ratio calculator for varying the pulse width counted by the first counter according to the mean luminance, a W/B selector for selecting either white color or black color to be inserted according to the mean luminance, a pulse generator for asserting the pulse width calculated by the ratio calculator at the timing counted by the second counter, and an output controller for selecting the color information corresponding to the timing trigger signal generated by the pulse generator or the white color or black color information which has been selected by the W/B selector, thereby enabling the white or black color information to be inserted for the improvement of the contrast.

Further, the image display apparatus by a projector may comprise a register for enabling the assert position to be set freely and a register for enabling the negate position to be set freely so that each trigger signal can be generated by counting the clock which is shifted towards the vertical synchronizing signal by the value of the freely settable register, thereby enabling each trigger signal to be generated.

Further, the image display apparatus by a projector may be designed so that RGB trigger generator comprises the register capable of freely setting the assert position and the register for freely setting the active pulse width, whereby the trigger is asserted by counting the clock, which is shifted towards the vertical synchronizing signal by the value of the freely settable register, and the trigger signal is negated by counting the clock by the number of the clock of the pulse width register, on the basis of the trigger assert position.

Further, the image display apparatus by using a projector may be designed so that, in outputting the color information corresponding to the trigger, the improvement of the contrast is sought by controlling the insertion timing of the white or black color while controlling the voltage outputted from the D/A conversion circuit according to the mean luminance, and that other purities can be maintained while raising the purity of the white color or the black color.

A particular embodiment in accordance with this invention will now be described with reference to the accompanying drawings; in which:-

Fig. 1 is a block diagram of a image display apparatus by a projector as an embodiment of the present invention.
Fig. 2 is a block diagram showing the detail of the color switch drive circuit given in Fig. 1.
Fig. 3 is a block diagram showing the detail of another example of the color switch drive circuit given in Fig. 1.
Fig. 4 is a waveform diagram of the timing signal of the projector according to the present invention.
Fig. 5 is a block diagram showing the detail of the white color and black color insertion timing control circuit given in Fig. 2 and Fig. 3.
Fig. 6 is a waveform diagram of the timing signal from the white color and black color insertion timing control circuit given in Fig. 5.
Fig. 7 is a block diagram of the circuit for outputting three independent trigger signals, i.e., those corresponding to the R, G and B colors, from the panel drive circuit 37 to the white color and black color insertion timing control circuit 43 within the color switch drive circuit 40.
Fig. 8 is a block diagram of a trigger generating means 62 for generating R trigger, G trigger and B trigger according to 1 trigger and dot clock from the panel drive circuit 37.
Fig. 9 is a block diagram showing an example of the R trigger generating means 62R among the RGB trigger generating means 62 given in Fig. 8.
Fig. 10 is a block diagram of a conventional image display apparatus by a projector.
Fig. 11 is a timing signal waveform diagram of a conventional image display apparatus by a projector given in Fig. 10.

The embodiments of the present invention will be explained below referring to pertinent drawings.

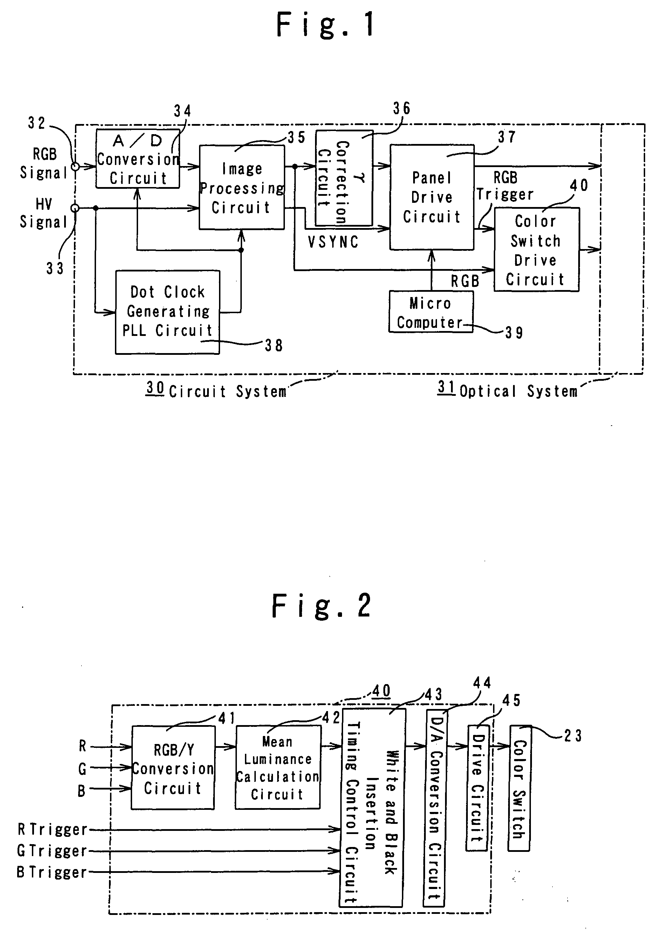

In Fig. 1, the A/D conversion circuit 34, the image processing circuit 34, the γ correction circuit 36 and the dot clock generating PLL circuit 38 are similar to the A/D conversion circuit 14, the image processing circuit 15, the γ correction circuit 16 and the dot clock generating PLL circuit 18 of the conventional circuit system 10 given in Fig. 10.

The panel drive circuit 37 has the function to generate the signals representing the tones of the R, G and B colors respectively and the trigger signals corresponding to the R, G and B colors synchronized with the signals representing the tones of the R, G and B colors. The trigger signals corresponding to the R, G and B colors respectively can readily be generated by the panel drive circuit, on the basis of the start signals representing the tones of the R, G and B colors respectively, and the detail of this process will be described later. Further, by using a register as the source of the start signals can be set through the microcomputer 39 or the like, whereby the adjust the white balance and the synchronization with the color switch drive circuit 40 become possible.

The color switch drive circuit 40 serves for the drive of color switch 23, the calculation of the mean luminance of the image to be displayed and the filtering of the white color or black color for a fixed period of time by the color switch 23 according to the calculated mean luminance. The mean luminance can readily be obtained by accumulating the R, G and B signals, which have been converted into Y (luminance) signals. Further, the filtering operation by the color switch 23 can be made readily by turning on the filter for R color while those for the B and G are turned off, provided that the trigger for R is asserted. For the insertion of the white color and black color, whether which of the white color and black color should be inserted and the length of the time period for insertion according to the mean luminance can be set readily.

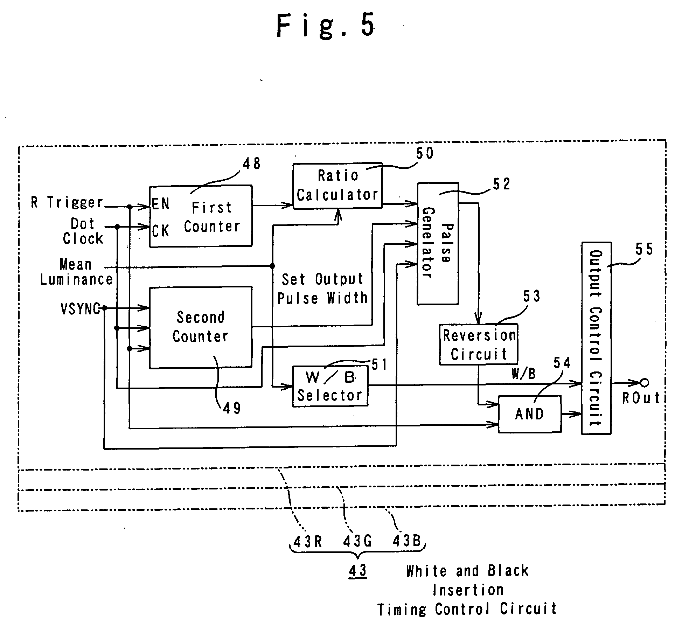

Next, the detail of the color switch drive circuit 40 as the subject matter of the present invention will be described referring to Fig. 2 and Fig. 4.

RGB/Y conversion circuit 41 generates the luminance signal Y from the RGB data, which are inputted for obtaining the mean luminance, according to the general formula conforming to the NTSC standard given below.

$$Y = 0.30R + 0.59G + 0.11B \tag{1}$$

Further, if the above formula (1) is used directly, the scale of the circuit becomes too large, since it is necessary to establish a formula satisfying the coefficients of the R, G and B colors, which are not given as those in terms of $1/2^n$. Therefore, the formula (2) given below, with which the coefficients can be satisfied by the bit shift operation and addition, is used.

$$Y = 0.3125 (= 1/2^2 + 1/2^4) \, R + 0.5625 (= 1/2 + 1/2^4) \, G + 0.1250 (= 1/2^3) \tag{2}$$

When this formula (2) is used, the Y signal, whose accuracy is good enough, though not perfect, for the calculation of the mean luminance, can be obtained.

In such a fashion, the Y signal, obtained from the R, G and B signals by means of the RGB/Y conversion circuit 41, is inputted to the mean luminance calculation circuit 42, where the mean luminance is calculated. The mean luminance can readily be sampled by counting the number of the C (carry) signal generated in adding by accumulation the Y signal generated during 1 VSYNC period. Since the mere addition make the sum too large, the carry signal, resulting from the addition, is counted, and, further, the carry signal is counted to obtain the APL signal of 4-5 bits, i. e., 16-32 kinds of signals.

The white color and black color insertion timing control circuit 43 calculates the white color/black color insertion timing on the basis of the calculated mean luminance and the trigger signals of the R, G and B colors to be inputted. The detail of the white color and black color insertion timing control circuit 43, which will be described later, is given in Fig. 5.

According to an embodiment of the present invention, the criterion of whether white color or black color is inserted is set to the mean luminance of 50%. Therefore, the white color or black color is not inserted when the mean luminance is 50% (40-60% actually), while the filters are displayed sequentially in a manner such that when the given trigger is for R, a red filter is displayed; when the trigger is for G, a green filter is displayed; when the trigger is for B, a blue filter is displayed. When the mean luminance is 50% or more (actually 60% or more), the display screen is judged to be generally bright, and so the white color is inserted (for the filtering of white color) for a maximum time period equivalent to 20% of the active time period of the trigger signal. Therefore, when the time period for the insertion is set to a maximum, in the case of the R trigger, the 80%, i.e., the first half thereof, is for the filtering of the red light, while the 20% is for the filtering of the white light. In this way, the purity of the white color can be enhanced further for higher luminance.

Further, for the insertion of the black color, the processing similar to that for the white color is applied when the mean luminance is 50% or less.

Inserting the white color makes the image generally bright while inserting the black color makes the image generally dark, which is equivalent to the expansion of the dynamic range. Thus, the contrast can be improved by applying the γ correction adjusted properly.

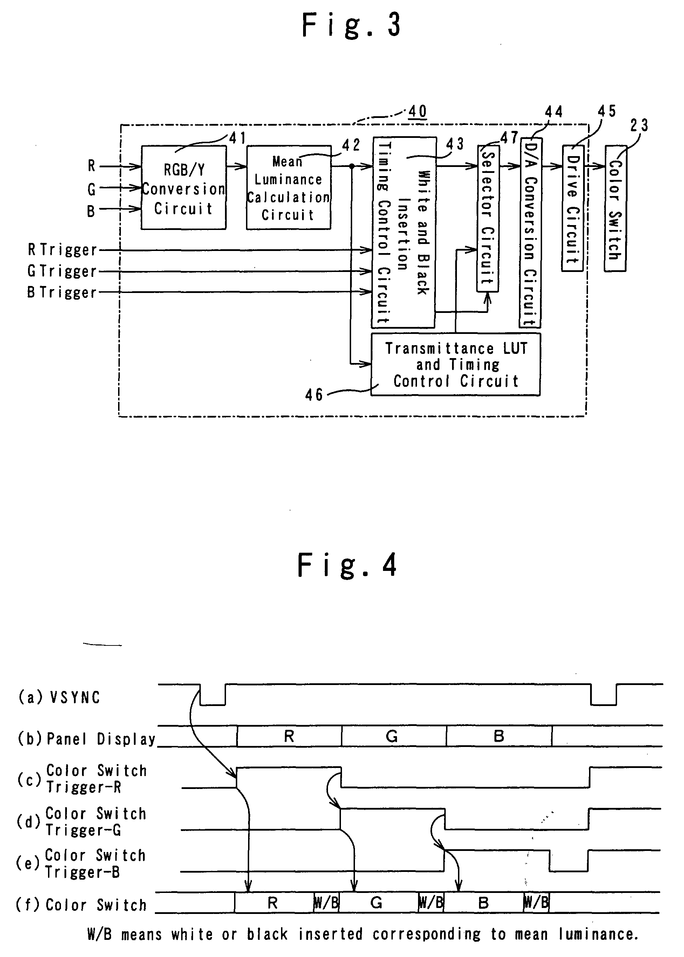

The circuits shown in Fig. 2 and Fig. 3 respectively are additionally provided with the transmittance LUT and the timing control circuit 46 for being selected by the selector circuit 47. Even with the composition of the circuit shown in Fig. 2 the contrast can better be improved, but the contrast can also be improved by adjusting the control voltage according to the mean luminance by utilizing that the color switch 23 is of liquid crystal construction.

In the case of the composition shown in Fig. 3, the transmittance is controlled only at the time of the filtering of the R, G and B lights and is not controlled at the time the insertion of the white color (at the time when the transmittance is 100%).

Fig. 4 schematically shows the timing of the color switch operation. These timings differ from those of the color switch operations in a conventional circuit composition shown in Fig. 11 in that the triggers for the R, G an B lights are separated from one another, that the R, G, and B of the color switch 23 are switched synchronizing with the corresponding triggers and that the filtering of the white color or the black color (W/B) is inserted in the latter half of each of the R, G and B of the color switch 23.

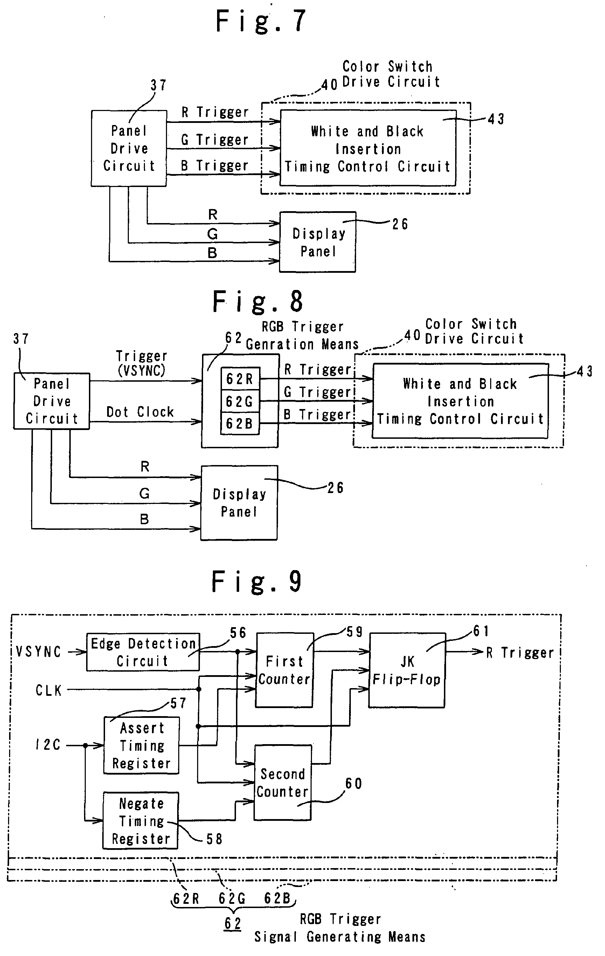

The triggers R, G and B of the color switch, which are represented by (d), (d) and (e) in Fig. 4, are outputted as 3 different signals from the panel drive circuit 37 as shown in Fig. 7, and are sent to the white color and black color insertion timing control circuit 43 shown in Fig. 2 or Fig. 3. Further, the R, G and B signals are sent to the display panel 26.

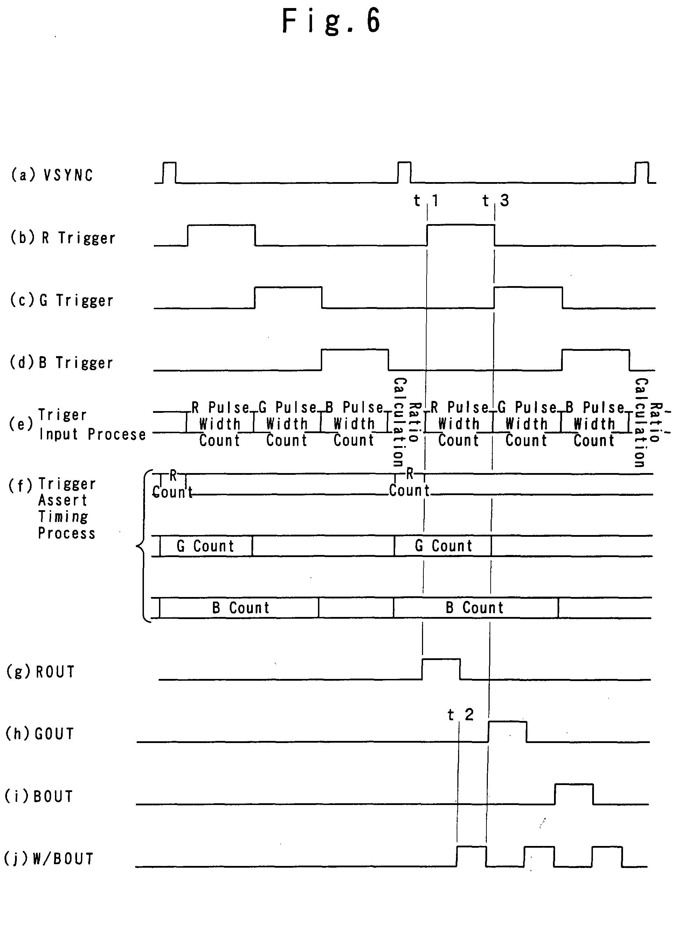

Fig. 5 shows the detailed block diagram of the white color and black color insertion timing control circuit 43, while Fig. 6 shows the waveform diagram of the timing signal.

Further, the white color and black color insertion timing control circuit 43 shown in Fig. 5 includes the circuit component 43R for the R out output corresponding to the R color switch trigger input, but the circuit components similar to this circuit component, that is, the circuit component 43G for G out output corresponding to G color switch trigger and the circuit component 43B for B out output corresponding to B color switch trigger are also provided, whereby the white color and black color insertion timing control circuit 43 comprises the 3 circuits for R, G and B.

The white color and black color insertion timing control circuit 43 operates responding to the inputs of the dot clock and VSYNC from the image processing circuit 35 capable of controlling the resolution.

In Fig. 5, the first counter 48 is designed for counting the pulse width of the inputted trigger signal. The second counter is designed for counting the asserted timing (from VSYNC to trigger assertion) of the trigger, that is, the second counter counts the time when the R trigger is asserted as shown in the case of the example given in Fig. 5.

The ratio calculator 50 is designed for calculating the pulse width of the trigger (e.g., the red light filtering pulse width since the trigger is for R light in the case of the example shown in Fig. 5), which is outputted on the bases of the inputted mean luminance and the pulse width counted by the first counter 48; for example, when the mean luminance is 100%, the number of pulses equivalent to 80% of that inputted from the first counter is commanded.

The W/B selector 51 selects either the white color or the black color insertion depending on the mean luminance; when the mean luminance is 50% or more, the W/B selector selects the white color (111) for insertion while selecting the black color (000) for insertion when the mean luminance is less than 50%. When the mean luminance is 60% or more, the white color is inserted, while the black color is inserted when the mean luminance is less than 40%; nothing may be inserted when the mean luminance is within 0%-40%.

The pulse generator 52 generates the filtering timing signal according to the number of the pulse outputted from the ratio calculator 50 and the assert timing signal outputted from the second counter 49, and the filtering timing signal can readily be generated by counting (to the number equivalent to the number of the pulse) the dot lock on the basis of the VSYNC.

The reversion circuit 53 is designed for reversing the output of the pulse generator 52. AND gate 54 is designed for taking the AND between the output of the reversion circuit 53 and the R trigger signal.

The output control circuit 55 is designed to determine the final output on the bases of the number of pulse and the W/B signal outputted from the W/B selector 51; for instance, when the output for W/B is [1], the final output can be determined by outputting the information (white color or black color) commanded by the W/B signal, while outputting the information of the red color when the output for W/B is [0] and the R trigger is given (white: 1 (G out), 1 (R out), 1 (B out), Black: 000, Red: 010, Blue: 001, Green: 100).

To be more specific, as shown in Fig. 6, the signal rising at tl of R trigger (b) is sent to AND gate 54, but, since the trigger for W/B out from the inversion circuit 53 is absent, there is no output from the AND gate 54, and R out, represented by (g), is outputted from the output control circuit 55.

The ratio calculator 50 calculates the timing for the fall of the R out on the basis of the mean luminance to make the pulse generator 52 give the output for the insertion of the W/B; the output for the insertion of the W/B is inverted by the inversion circuit 53 to rise at t2, thereby causing the W/B out trigger, represented by (j) to be outputted from the AND gate 54. Throughout the duration of the output from the AND gate, the information for W/B, instead of the R out from the W/B selector 51, is outputted from the output control circuit 55. At t3 when the R trigger is absent, the output from the AND gate 54 is absent, resulting in the absence of the W/B information from the output control circuit 55.

The above embodiment is a case where the three different trigger signals are used, but, even where only one trigger signal is used, but the insertion of the white color and the black color according to the present invention can be realized even with a single trigger signal by providing an R trigger generator 62R, a G trigger generator 62G and B trigger generator 62B between the panel drive circuit 37 and the white color and black color insertion timing control circuit 43.

Fig. 9 shows an example of the circuit of the R trigger generating means 62R, wherein the dot clock and the VSYNC from the image processing circuit having a resolution varying function are inputted to the input side of the circuit. Further, the circuit is one designed to use the I2C bath of the control signal from a microcomputer or the like for freely setting the assertion and negation for filtering.

More particularly, the circuit comprises an edge detection circuit 56, an assert timing register 57, a negate timing register 58, a first counter 59, a second counter 60 and a JK flip-flop 61, wherein the first counter 59 outputs the assert timing signal, while the second counter 60 outputs the negate timing signal.

In the above embodiment, in outputting the color information corresponding to the trigger, the voltage outputted from the D/A conversion circuit 44 is controlled according to the mean luminance, and the contrast is improved by controlling the white color or black color insertion timing to improve not only the purity of the white color or black color but also other purities.

According to the present invention, the color switch drive circuit is designed for obtaining the mean luminance of the picture element data (original image) which has undergone the image processing so that the white color or the black color can be inserted among the displays of the tones of the R, G and B, thereby expanding the dynamic range for the display of the image.

As for the triggers to drive the color switch, the triggers for the R, G and B are generated respectively by the panel drive circuit for being inputted to the color switch drive circuit so that the display of the tones by the color switch and the coloring by the color switch can be synchronized with each other.

The criterion for selecting either the white color or the black color is set to the mean luminance of about 50% so that the white color is inserted when the mean luminance is above this criterion, while the black color is inserted when the mean luminance is below this criterion, thereby contributing to the expansion of the dynamic range and the improvement of the contrast.

The insertion timing of the white color or the black color being controlled according to the mean luminance, not only the purity of the white color or the black color can be improved but also other purities can be maintained as high as possible.

The color switch drive circuit comprises the RGB/Y conversion circuit for converting the R, G and B signals to the luminance signals, the mean luminance calculation circuit for calculating the mean luminance, the white color/ black color insertion timing control circuit for generating the timing signals for the insertion of the white color or black color, and the D/A conversion circuit for converting the output of the white color/black color insertion timing control circuit to analog signal, wherein the triggers for R, G and B are respectively inputted to the white color/black color insertion timing control circuit so that the white color or black color insertion timing control circuit synchronizes the first half of each trigger with each trigger to output the color information corresponding to each trigger, while the information for the white color or black color is outputted corresponding to the latter half of the trigger.

The white color/black color insertion timing control circuit is designed to generate the output timing signal for each of the R, G and B according to inputted single trigger so that the color information corresponding to the generated timing signal is outputted, and the white color or black color information is outputted according to the mean luminance, whereby the color information corresponding to the generated output timing is outputted to output the white color or black color information is outputted according to the mean luminance.

In outputting the color information corresponding to the trigger, the transmittance of the color switch is controlled by controlling the voltage outputted from the D/A conversion circuit according to the mean luminance, whereby the transmittance of the color switch is controlled while improving the contrast.

The white color/black color insertion timing control circuit comprises the first counter for counting the pulse width of the trigger signal, the second counter for counting and detecting the assert position of the trigger signal, the ratio calculator for varying the pulse width counted by the first counter, according to the mean luminance, the W/B selector for selecting the white color or black color to be inserted according to the mean luminance, the pulse generator for asserting the pulse width calculated by the ratio calculator at the timing of the count made by the second counter, and the output control circuit for selecting the color information corresponding to the timing trigger signal generated by the pulse generator or the color information of either the white color or the black color selected by the W/B selector, whereby the color information for the white color or black color can be inserted while improving the contrast.

In outputting the color information corresponding to the trigger, the voltage outputted from the D/A conversion circuit is controlled according to the mean luminance, while not only improving the contrast by controlling the insertion timing of the white color or black color but also improving the purity of the white color or black color with other purities kept unchanged.

**Claims**

**1.** A projector image display apparatus, the projector being a single polarizer projector comprising an image processing circuit for scaling processing of the image, a $\gamma$ correction circuit for subjecting a color to $\gamma$ correction for obtaining a color suiting to the display on the display panel, a panel drive circuit for driving the display panel and a color switch for selecting a color with a specific color tone to be displayed, wherein the color switch drive circuit is designed to determine the mean luminance of the picture element data outputted from the image processing circuit so that the white color or black color can be inserted among the displayed gradations of the R, G and B lights according to the value of the mean luminance to expand the dynamic range for image display.

2.  A projector image display apparatus according to claim 1, wherein the panel drive circuit generates the triggers for the R, G and B lights in order to drive the color switch, whereby the color tone display on the display panel and the coloring by the color switch can be synchronized with each other.

3.  A projector image display apparatus according to claim 1 or 2, wherein the criterion for selecting either the white color or black color is set to the mean luminance of about 50% so that the white color is inserted when the mean luminance is greater than the criterion for selection while the black color is inserted when the mean luminance is smaller than the criterion, thereby contributing to the improvement of the contrast.

4.  A projector image display apparatus according to any preceding claim wherein the timing for the insertion of the white color or black color is controlled according to the mean luminance, thereby not only improving the purity of the white color or black color but also maintaining the purities of other colors as high as possible.

5.  A projector image display apparatus according to any preceding claim wherein the color switch drive circuit comprises the RGB/Y conversion circuit for converting the R, G and B signals to the Y signals, the mean luminance calculation circuit for calculating the mean luminance, the white color/black color insertion timing control circuit for generating the white color/black color insertion timing signal, and the D/A conversion circuit for converting the output of the white color/black color insertion timing control circuit to analog output, whereby the triggers for the R, G and B colors are outputted respectively to the white color/black color insertion timing control circuit so that the white color/black color insertion timing control circuit is able to output the color information corresponding to and synchronized with each trigger and matching with the first half of the trigger, while outputting the white color or black color information according to the mean luminance and matching with the latter half of the trigger.

6.  A projector image display apparatus according to any one of claims 1 to 4 wherein the color switch drive circuit comprises the RGB/Y conversion circuit for converting the RGB signals to the luminance signals, the mean luminance calculation circuit for determining the mean luminance, the white color/black color insertion timing control circuit for generating the white color/black color insertion timing signal, and the D/A conversion circuit for converting the output of the white color/black color insertion timing control circuit to analog output, whereby each of the triggers for the R, G and B is outputted by the RGB trigger generating means responding to a single trigger outputted from the panel drive circuit; the white color/black color insertion timing control circuit generates the output timing signal for each of the R, G and B colors, according to each of the triggers for the R, G and B so that the white color information or the black color information can be outputted according to the mean luminance.

7.  A projector image display apparatus according to claim 5 or 6 wherein, in outputting the color information corresponding to the trigger, the voltage output from the D/A conversion circuit is controlled according to the mean luminance to control the transmittance of the color switch, thereby improving the contrast.

8.  A projector image display apparatus according to claim 5, 6, or 7 wherein the white color/black color insertion timing control circuit comprises the first counter for counting the pulse width of the trigger signal, the second counter for counting and detecting the assert position of the trigger signal, the ratio calculator for varying the pulse width counted by the first counter, according to the mean luminance, the W/B selector for selecting either the white color or the black color according to the mean luminance, the pulse generator for asserting the pulse width determined by the ratio calculator at the timing of the counting by the second counter, and the output control circuit for selecting the color information corresponding to the trigger signal or the white color or the black color information responding to the timing signal generated by the pulse generator, thereby enabling the white color or black color information to be inserted and the contrast to be improved.

9.  A projector image display apparatus according to claim 5, 6, 7 or 8 wherein the RGB trigger generating means comprises a assert timing register capable of freely setting the assert position and an negate timing register capable of freely setting the negate position, whereby the trigger signals can be generated by counting these freely settable registered values and the clocks from the vertical synchronizing signal.

**10.** A projector image display apparatus according to claim 5, 6, 7, or 8, wherein the RGB trigger generation means comprises the assert timing register capable of freely setting the assert position and the pulse width register capable of freely setting the active pulse width, whereby the trigger is asserted by counting the freely settable registered values and the clock from the vertical synchronizing signal, and the trigger signal is negated by counting the number of the clocks registered with the pulse width register and the clocks.

# Fig. 1

```
32
RGB ──○──→  ┌─────────┐      ┌──────────┐      ┌──────────┐      ┌──────────┐        RGB
Signal       │  A / D   │      │  Image    │  35  │    γ      │  36  │  Panel    │  37  Trigger        40
             │Conversion│──34─→│Processing │──→──│Correction │──→──│  Drive    │───────→        ┌──────────┐
             │ Circuit  │      │ Circuit   │      │ Circuit   │      │ Circuit   │               │  Color    │
HV ──○──┐    └─────────┘      └──────────┘      └──────────┘      └──────────┘               │  Switch   │───→
Signal  │         ↑               ↑   ↑            VSYNC ─────────────→                        │  Drive    │
        │         │               │   │                               ↑                        │  Circuit  │
 33     │    ┌─────────┐          │                              RGB  │                        └──────────┘
        └───→│Dot Clock│──────────┘                         ┌──────────┐
             │Generating│                                    │  Micro    │
             │PLL Circuit│                                    │ Computer  │─── 39
             └─────────┘
                   38
```

30 Circuit System                     31 Optical System

# Fig. 2

```
                            ┌──────────┐      ┌──────────┐  40  43   44  45
R ──→  ┌──────────┐  41  │   Mean    │  42  │ Timing    │White│D/A │Drive│Color│  23
        │  RGB/Y   │      │ Luminance │      │ Control   │ and │Con │Cir  │Switch│
G ──→  │Conversion │──→──│Calculation│──→──│ Circuit   │Black│ver │cuit │      │
        │ Circuit  │      │ Circuit   │      │           │Inser│sion│     │      │
B ──→  └──────────┘      └──────────┘      │           │tion │Cir │     │      │
                                            │           │     │cuit│     │      │
R Trigger ──────────────────────────────→  │           │     │    │     │      │
G Trigger ──────────────────────────────→  │           │     │    │     │      │
B Trigger ──────────────────────────────→  └──────────┘     │    │     │      │
```

10

# Fig. 3

```
R ────────►┌──────────┐    ┌──────────┐ 42      ┌──┬────────┐ 43   ┌──────┐47 ┌─────────┐44  ┌──────┐45  ┌──────┐23
           │  RGB/Y   │41  │   Mean   │         │T │White   │      │S     │   │D/A      │    │D     │    │C     │
G ────────►│Conversion│    │Luminance │         │i │and     │      │e     │   │Conversion│   │r     │    │o     │
           │ Circuit  │    │Calculation│        │m │Black   │      │l     │   │Circuit   │   │i     │    │l     │
B ────────►│          │    │ Circuit  │         │i │Insertion│     │e     │   │         │    │v     │    │o     │
           └──────────┘    └──────────┘         │n │        │      │c     │   │         │    │e     │    │r     │
                                                │g │        │      │t     │   │         │    │      │    │      │
R Trigger ────────────────────────────────────►│  │        │      │o     │   │         │    │C     │    │S     │
                                                │C │        │      │r     │   │         │    │i     │    │w     │
G Trigger ────────────────────────────────────►│o │        │      │      │   │         │    │r     │    │i     │
                                                │n │        │      │C     │   │         │    │c     │    │t     │
B Trigger ────────────────────────────────────►│t │        │      │i     │   │         │    │u     │    │c     │
                                                │r │        │      │r     │   │         │    │i     │    │h     │
                                                │o │        │      │c     │   │         │    │t     │    │      │
                                                │l │        │      │u     │   │         │    └──────┘    └──────┘
                                                │  │        │      │i     │
                                                │C │        │      │t     │
                                                │i │        │      └──────┘
                                                │r │        │
                                                │c │        │
                                                │u │        │
                                                │i │        │
                                                │t │        │
                                                └──┴────────┘
                                                     ┌──────────────────┐
                                                     │  Transmittance LUT│
                                                     │    and Timing     │
                                                     │  Control Circuit  │
                                                46   └──────────────────┘
```

*(Block diagram labeled 40)*

# Fig. 4

(a) VSYNC

(b) Panel Display    R      G      B

(c) Color Switch Trigger-R

(d) Color Switch Trigger-G

(e) Color Switch Trigger-B

(f) Color Switch    R   W/B   G   W/B   B   W/B

W/B means white or black inserted corresponding to mean luminance.

# Fig. 5

43 White and Black
Insertion
Timing Control Circuit

# Fig. 6

(a) VSYNC

(b) R Trigger

(c) G Trigger

(d) B Trigger

(e) Triger Input Process

(f) Trigger Assert Timing Process

(g) ROUT

(h) GOUT

(i) BOUT

(j) W/BOUT

# Fig. 7

Color Switch Drive Circuit

37
Panel Drive Circuit

R Trigger
G Trigger
B Trigger

40

White and Black Insertion Timing Control Circuit

43

R
G
B

Display Panel

26

# Fig. 8

RGB Trigger Genration Means

Color Switch Drive Circuit

37
Panel Drive Circuit

Trigger (VSYNC)

Dot Clock

62

62R
62G
62B

R Trigger
G Trigger
B Trigger

40

White and Black Insertion Timing Control Circuit

43

R
G
B

Display Panel

26

# Fig. 9

VSYNC → Edge Detection Circuit

56

First Counter

59

JK Flip-Flop

61
→ R Trigger

CLK

I2C

Assert Timing Register

57

Second Counter

60

Negate Timing Register

58

62R    62G    62B

62

RGB Trigger Signal Generating Means

# Fig.10

Project to Screen

RGB Signal

**A/D Conversion Circuit** 14

**Image Processing Circuit** 15

**γ Correction Circuit** 16

**Panel Drive Circuit** 17

12

HV Signal 13

**Dot Clock Generating PLL Circuit** 18

VSYNC

**Micro Computer** 19

20

**Color Switch Drive Circuit**

26 **Panel**

25 **Doubler**

24 **PBS**

23 **Color Switch**

22 **Polarizer**

21 **Light Source**

10 Circuit System

11 Optical System

# Fig.11

(a) VSYNC

(b) Panel Display    R    G    B

(c) Color Switch Trigger

(d) Color Switch    R    G    B

These are varied by adjustment of white balance